**Europäisches Patentamt**

**European Patent Office**

**Office européen des brevets**

(19)

(11) Veröffentlichungsnummer : **0 216 318 B2**

(12)

# NEUE EUROPÄISCHE PATENTSCHRIFT

(45) Veröffentlichungstag der neuen Patentschrift :
**29.07.92 Patentblatt 92/31**

(51) Int. Cl.⁵ : **B60K 17/344**

(21) Anmeldenummer : **86112915.3**

(22) Anmeldetag : **18.09.86**

(54) **Getriebeanordnung.**

(30) Priorität : **21.09.85 DE 3533745**

(43) Veröffentlichungstag der Anmeldung :
**01.04.87 Patentblatt 87/14**

(45) Bekanntmachung des Hinweises auf die
Patenterteilung :
**13.12.89 Patentblatt 89/50**

(45) Bekanntmachung des Hinweises auf die
Entscheidung über den Einspruch :
**29.07.92 Patentblatt 92/31**

(84) Benannte Vertragsstaaten :
**DE FR GB IT**

(56) Entgegenhaltungen :
**EP-A- 0 149 742**
**DE-A- 2 135 791**
**DE-A- 3 203 707**
**DE-A- 3 227 870**
**DE-A- 3 317 247**
**DE-A- 3 427 725**
**DE-A- 3 434 394**
**DE-A- 3 514 370**
**DE-C- 3 428 865**
**GB-A- 2 132 303**
**GB-A- 2 146 727**

(73) Patentinhaber : **Adam Opel Aktiengesellschaft**
**Bahnhofsplatz 1 Postfach 1560**
**W-6090 Rüsselsheim (DE)**

(72) Erfinder : **Bausch, Paul**
**Auf der Irrlitz 30**
**W-6229 Hattenheim (DE)**
Erfinder : **Hilkert, Hans-Jürgen, Dipl.-Ing.**
**Bodelschwinghstrasse 13**
**W-6095 Ginsheim-Gustavsburg (DE)**
Erfinder : **Kirschner, Jochem, Dipl.-Ing.**
**Am Himmelspfad 25**
**W-6094 Bischofsheim (DE)**
Erfinder : **Victor, Hermann, Ing. (grad)**
**Bernhard-Winter-Strasse 43**
**W-6500 Mainz-Mombach (DE)**

(74) Vertreter : **Dipl.-Phys.Dr. Manitz Dipl.-Ing.,**
**Dipl.-W.-Ing. Finsterwald Dipl.-Ing. Grämkow**
**Dipl.-Chem.Dr. Heyn Dipl.-Phys. Rotermund**
**etal**
**Morgan, B.Sc.(Phys.) Robert-Koch-Strasse 1**
**W-8000 München 22 (DE)**

EP 0 216 318 B2

## Beschreibung

Die Erfindung betrifft eine Getriebeanordnung gemäß dem Oberbegriff des Patentanspruchs 1.

Bei einer in der GB-OS 21 04 178 beschriebenen Getriebeanordnung der eingangs genannten Art sind den Fahrzeugrädern jeweils Sensoren zugeordnet, die der Drehzahl entsprechende Signale erzeugen. Diese Signale werden derart verarbeitet, daß ein dem Verhältnis zwischen den Raddrehzahlen der Vorderachse und den Raddrehzahlen der Hinterachse entsprechendes Signal zur Verfügung steht. Sobald das Drehzahlverhältnis außerhalb eines vorgebbaren Bereiches liegt, wird der Fahrzeugantrieb automatisch auf Allradantrieb umgesteuert. Bei dieser Anordnung sind zusätzlich Sensoren zur Überwachung des Lenkwinkels vorgesehen, um bei stark eingeschlagener Lenkung den Allradantrieb nicht bzw. erst bei außerordentlich stark erhöhten Abweichungen zwischen den Drehzahlen von Vorder und Hinterrädern einzuschalten. Dadurch soll die Handhabung des Fahrzeuges beim Durchfahren enger Kurven verbessert werden.

In der DE-A-3 230 703 ist ein Kraftfahrzeug beschrieben, bei dem die Antriebsverbindung zu den Vorderrädern mittels einer von einem Steuerventil beaufschlagten Lamellenkupplung unterbrechbar ist. Das Steuerventil wird über zwei Unterbrecherschalter angesteuert, welche mittels eines an der Zahnstangenlenkung des Kraftfahrzeugs befestigten Hebels betätigt werden. Der Hebel ist derart angeordnet, daß er jeweils einen der Unterbrecherschalter bei voll eingeschlagener Lenkung schließt. Demzufolge schaltet das Steuerventil von permanentem Allradantrieb auf Hinterradantrieb um.

Aus der DE-PS-21 35 791 ist ein zwischen Fahrzeugmotor und zwei permanent angetriebenen Achsen angeordnetes Ausgleichsgetriebe bekannt, welches als Planetengetriebe in üblicher Weise mit Sonnenrad, Hohlrad und dazwischen umlaufenden Planetenrädern ausgebildet ist. Dabei ist die Eingangswelle, welche den Planetenträger trägt, koaxial innerhalb einer mit dem Sonnenrad verbundenen Ausgangswelle angeordnet, während die andere Ausgangswelle auf der von der vorgenannten Ausgangswelle abgewandten Seite des Planetenträgers mit dem Hohlrad drehfest verbunden ist. Auf der einen Ausgangswelle sind Kupplungslamellen undrehbar angeordnet, welche mit weiteren Kupplungslamellen zusammenwirken, die ihrerseits undrehbar an einem mit dem Hohlrad verbundenen ringförmigen Lamellenträger drehfest angeordnet sind. Diese Kupplung arbeitet als sog. Viskosekupplung, bei der die Drehmomentübertragung bei zunehmender Drehzahldifferenz zwischen den beiden Ausgangswellen verstärkt wird.

Die DE-OS 34 34 394 zeigt eine Getriebeanordnung für ein Kraftfahrzeug mit Frontantrieb und zuschaltbarem Hinterachsantrieb. Solange die Vorderräder und die Hinterräder mit hinreichend gleicher Umlaufgeschwindigkeit drehen, bleibt eine Kupplung geöffnet, welche den zum Antrieb der Hinterräder dienenden Getriebeausgang mit dem zu den Vorderrädern führenden Getriebeausgang antriebsmäßig koppelt. Treten jedoch größere Drehzahldifferenzen zwischen Vorderrädern und Hinterrädern auf, oder wird das Fahrzeug zur Geschwindigkeitserhöhung stark beschleunigt oder zur Geschwindigkeitsverminderung stark verzögert, so wird die Kupplung mit zunehmendem Kraftschluß wirksam.

Bei diesen bekannten Getriebeanordnungen ist es in der Praxis nicht mit vertretbarem Aufwand möglich, das Fahrzeug mit einem Antiblockiersystem (ABS) auszurüsten, da die Drehgeschwindigkeiten der Räder einer Achse aufgrund der antriebsmäßigen Kopplung der beiden Achsen über die bei höheren Drehzahldifferenzen zwischen Vorderrädern und Hinterrädern wirksam werdenden Kupplungsanordnungen zwangsläufig Rückwirkungen auf die Drehbewegungen der Räder an der anderen Achse haben. Diese Rückwirkungen treten umso stärker auf, je größer die Differenz zwischen den mittleren Drehzahlen der Räder an den beiden Achsen ist.

Aufgrund der genannten Rückwirkungen wird den Sensoren des Antiblockiersystems an den Rädern ein in Wirklichkeit nicht vorhandener zu großer oder zu kleiner Reibschluß der Räder auf dem jeweiligen Untergrund vorgetäuscht. Damit ist aber eine vom Verhalten der übrigen Räder unabhängige Steuerung der Bremskraft jedes einzelnen Rades, wie es für ein Antiblockiersystem notwendig bzw. zweckmäßig ist, nicht mehr möglich.

Entsprechendes gilt auch für die Getriebeanordnung nach der DE-OS 33 17 247. Bei der aus dieser Druckschrift bekannten Getriebeanordnung für ein Kraftfahrzeug mit Allradantrieb ist eine antriebsmäßig unmittelbar mit der Vorderachse gekoppelte Getriebewelle über eine von ihr abzweigende Welle zusätzlich über eine Viskose- und Freilaufkupplung mit der Hinterachse des Kraftfahrzeuges antriebsmäßig gekoppelt. Der Kraftschluß der Viskosekupplung wird wiederum verstärkt, wenn die Differenz zwischen den Drehzahlen von Vorder- und Hinterachse ansteigt. Die Freilaufkupplung bewirkt dabei, daß die antriebsmäßige Kopplung zwischen Vorder- und Hinterachse unterbrochen wird, wenn die Drehzahl der Hinterachse oberhalb der Drehzahl der Vorderachse liegt. Damit soll erreicht werden, daß eine durch Betätigen der Betriebsbremse gegebenenfalls hervorgerufene Verringerung der Umlaufgeschwindigkeit der Vorderräder nicht über den Antriebsstrang auf die Hinterräder übertragen werden kann. Sollten also beim Abbremsen des Fahrzeuges die Vorderräder blockieren, so können sich die Hinterräder, soweit sie nicht ebenfalls von der Betriebsbremse überbremst werden, noch weiter drehen, so daß das Fahrzeug eine hinreichende Richtungsstabilität behält. Üblicherweise ist die Betriebsbremse eines Fahrzeuges derart ausgelegt, daß zunächst die Vorderräder blockieren ; dieses Bremsverhalten wird aufgrund der Freilaufkupplung trotz des Allradantriebs nicht beeinträchtigt. Allerdings ist auch diese Getriebeanordnung für eine Kombination mit einer Betriebsbremse mit Antiblockiersystem wenig geeignet, da die Hinterachse von der Vorderachse in jedem Falle zusätzlich angetrieben wird, wenn die Drehzahl der Vorderachse größer als die der Hinterachse ist.

Aus der DE 34 27 725 A1 ist eine Getriebeanordnung der eingangs genannten Art bekannt, bei der einer permanent angetriebenen Achse über eine Rutschkupplung mit steuerbarem Grad des Kupplungseingriffs eine weitere Achse zuschaltbar ist. Mittels einer elektronischen Steuer- und Regeleinrichtung wird der Kupplungseingriff derart gesteuert, daß der Schlupf der Räder der einen Achse in einer vorgebbaren festen Beziehung zum Schlupf der Räder der anderen Achse steht. Die den Grad des jeweiligen Kupplungseingriffes bestimmende Steuer- und Regeleinrichtung ist zusätzlich derart ausgelegt, daß sie den Kupplungseingriff völlig aufhebt, sobald und solange die Betriebsbremse des Fahrzeugs betätigt ist.

Das Ziel der Erfindung besteht darin, eine weitere Getriebeanordnung der eingangs genannten Art zu schaffen und diese Getriebeanordnung insbesondere im Hinblick auf eine Verwendung in mehrachsig angetriebenen bzw. antreibbaren Kraftfahrzeugen dahingehend zu verbessern, daß trotz des Einsatzes einer Betriebsbremse mit einem Antiblockiersystem unter Aufrechterhaltung eines solch geringen Regelaufwandes, wie beispielsweise bei einem Fahrzeug mit nur einer angetriebenen Achse und einem entsprechenden Bremssystem, nicht nur bei der Auslegung des Betriebsverhaltens der Kupplung bzw. der Sperre bei normalen Betriebsbedingungen eine weitestgehende Freiheit erhalten wird, sondern gleichzeitig ein äußerst zuverlässiger Betrieb gewährleistet ist.

Die Aufgabe wird nach der Erfindung dadurch gelöst, daß als Ventilanordnung ein zwischen einer Offenstellung und einer Schließstellung pulsierendes Magnetventil vorgesehen ist, und daß die Steuerschaltung das zeitliche Verhältnis (Tastverhältnis) zwischen diesen beiden Stellungen in Abhängigkeit von den Signalen an den nicht bevorrechtigten Eingängen kennfeldabhängig steuert, soweit nicht ein die Kupplung lösendes übergeordnetes Signal an einem bevorrechtigten Eingang vorliegt.

Aufgrund dieser Ausbildung ist beispielsweise im nicht gebremsten Betriebszustand durch die besondere intermittierende Betriebsweise stets ein auf zuverlässige und einfache Weise stufenlos und feinfühlig regelbarer und problemlos an die unterschiedlichsten Betriebsbedingungen anpaßbarer Kupplungseingriff gewährleistet, wobei das sich hierbei ergebende komplexe Betriebsverhalten der Kupplung insbesondere völlig unabhängig von den Anforderungen an die Regelung bei aktiviertem Antiblockiersystem ausgelegt werden kann. Durch die Ausbildung der Steuerschaltung mit nicht bevorrechtigten Eingängen zur kennfeldabhängigen Steuerung bei normalen Betriebsbedingungen sowie mit einem bevorrechtigten Eingang, beispielsweise für ein Bremssignal, erhält man auf überraschend einfache Weise eine klare Trennung der komplexen und feinfühligen Regelung des Kupplungseingriffs während eines normalen Betriebs und einer bei aktiviertem Antiblokkiersystem einsetzenden Regelung. Die Steuerschaltung kann insbesondere als digitale elektronische Schaltung ausgebildet sein.

Die Steuerschaltung besitzt vorzugsweise weitere bevorrechtigte Eingänge, die mit Sensoren verbunden sind, welche diesen bevorrechtigten Eingängen ein die Kupplung lösendes Signal zuführen, wenn der Fahrzeugmotor stillsteht und/oder die Zündung ausgeschaltet ist.

Die nicht bevorrechtigten Eingänge können zweckmäßigerweise mit Sensoren od. dgl. verbunden sein, deren Signale neben der Drehzahldifferenz zwischen Rädern unterschiedlicher Achsen eines Fahrzeuges und dem Lenkradeinschlag die Fahrgeschwindigkeit und/oder die Getriebeöltemperatur wiedergeben, wobei die Steuerschaltung das Steuerventil in Abhängigkeit von diesen Signalen betätigt, soweit nicht ein die Kupplung lösendes übergeordnetes Signal vorliegt.

Dabei trägt die Berücksichtigung der Getriebeöltemperatur zu einem besonders gut reproduzierbaren Betriebsverhalten bei, wenn eine im Hinblick auf gute Standfestigkeit bevorzugte nasse Mehrscheibenkupplung vorgesehen ist. Mit zunehmender Temperatur wird namlich das Getriebeöl dünnflüssiger. Dementsprechend kann das Öl zwischen benachbarten Kupplungsscheiben leichter verdrängt werden, so daß der Kraft- bzw. Reibschluß zwischen benachbarten Kupplungsscheiben bei gleichbleibenden Andruckkräften zwischen den Kupplungssheiben zunimmt. Durch die Anordnung eines entsprechenden, auf die Öltemperatur reagierenden Sensors kann also dieser Effekt unmittelbar bei der Steuerung berücksichtigt und damit kompensiert werden.

Im übrigen wird die Kupplung zweckmäßiger weise so gesteuert, daß ihr Kraftschluß nach Überschreiten eines Schwellwertes für die Drehzahldifferenz zwischen den Getriebeausgängen mit zunehmender Drehzahldifferenz ansteigt. Der genannte Schwellwert wird jedoch zweckmäßigerweise in Abhängigkeit vom Lenkradeinschlag sowie der Fahrgeschwindigkeit eines Kraftfahrzeuges verändert, d. h. der Schwellwert der getriebeausgangsseitigen Drehzahlunterschiede, unterhalb dessen die Kupplung praktisch kein Drehmoment zu übertragen vermag, wird mit zunehmendem Lenkradeinschlag sowie zunehmender Fahrgeschwindigkeit erhöht. Dadurch wird eine Beeinträchtigung der Lenk- bzw. Manöverierfähigkeit des Fahrzeuges aufgrund einer

3

antriebsmäßigen Kopplung mehrerer Achsen bei kritischen Fahrsituationen sicher verhindert.

Um eine besonders sanfte Betätigung der Kupplung bzw Sperre zu ermöglichen, ist bevorzugt in einer ausgangsseitig des Steuerventiles angeschlossenen, zum Fluidaggregat führenden Druckleitung eine Drossel und zwischen derselben und dem Steuerventil eine gedrosselte Ahzweigleitung angeordnet, welche zur Niederdruckseite des das Steuerventil umfassenden Fluidsystems führt.

Eingangsseitig ist das Steuerventil zweckmäßigerweise über ein Druckbegrenzerventil sowie einen zwischen dem Druckbegrenzerventil und dem Steuerventil angeordneten Druckspeicher mit der Druckseite einer Druckpumpe verbunden.

Wenn die Getriebeanordnung in zweckmäßiger Weise als Ausgleichs- bzw. Differentialgetriebe mit drei Wellen ausgebildet ist, wobei die Verdrehung jeweils zweier Wellen beliebig und unabhängig voneinander erfolgen kann, während die Verdrehung der jeweils dritten Welle durch die der beiden anderen Wellen festgelegt ist, so ist die Kupplung bzw. Sperre bevorzugt zwischen der als Getriebeeingang angeordneten Welle und einer der beiden die Getriebeausgänge bildenden Wellen angeordnet. Dadurch wird ein Hauptantriebsstrang geschaffen, dessen Teilstücke durch die Kupplung bzw. Sperre unmittelbar miteinander verbunden sind.

Bevorzugt ist als Getriebe ein gleichachsiges Planetengetriebe mit zwischen einem Sonnenrad und einem Hohlrad umlaufenden Planeten angeordnet, derart, daß die Eingangswelle, welche den Planetenträger treibt, koaxial innerhalb einer mit dem Sonnenrad verbundenen Ausgangswelle angeordnet und die auf der von der genannten Ausgangswelle abgewandten Seite des Planetenträgers angeordnete andere Ausgangswelle mit dem Hohlrad verbunden ist, wobei am Planetenträger ein das Hohlrad koaxial umgreifender Tragteil zur Halterung von Kupplungslamellen angeordnet ist, die relativ zum Tragteil bzw. Planetenträger undrehbar sind und mit weiteren Kupplungslamellen zusammenwirken, welche auf der anderen Ausgangswelle bzw. einem damit verbundenen Teil undrehbar angeordnet sind.

Die Kupplungslamellen können dabei zwischen der mit der anderen Ausgangswelle verbundenen Stirnseite des Hohlrades bzw. einem dort angeordneten Widerlager sowie einer davon axial beabstandeten, mit den Lamellen umlaufenden Druckscheibe angeordnet sein, welche zur reibschlüssigen Verbindung der Kupplungslamellen mittels des Fluidaggregates gegen die Kupplungslamellen verschiebbar angeordnet und gegenüber einem diesen Vorschub ausführenden Betätigungsorgan des Fluidaggregates mittels Axiallager drehbar abgestützt ist.

Dabei kann das Betätigungsorgan durch eine auf der anderen Antriebswelle gleitgeführte Einrückmuffe gebildet werden, welche mittels Einrückhebel verschiebbar ist, die ihrerseits mit Kolben bzw. Kolbenstangen von parallel zur Getriebeachse als Fluidaggregat angeordneten Kolben-Zylinder-Aggregaten verbunden sind.

Stattdessen ist auch eine Anordnung vorteilhaft, bei der als Betätigungsorgan ein in einem Ringzylinder im Getriebegehäuse axial verschiebbarer, jedoch undrehbar untergebrachter Ringkolben angeordnet ist, welcher zusammen mit dem Ringzylinder das Fluidaggregat bildet.

Weitere vorteilhafte Ausführungsvarianten der Erfindung sind in den Unteransprüchen angegeben.

Die Erfindung wird im folgenden anhand von Ausführungsbeispielen unter Bezugnahme auf die Zeichnung näher erläutert; in dieser zeigt:

Fig. 1 einem Axialschnitt einer ersten Auführungsform einer Getriebeanordnung, mit einer Mehrscheibenflüssigkeitskupplung zwischen dem Getriebeeingang und einem Getriebeausgang.

Fig. 2 einen der Fig. 1 entsprechenden Axialschnitt einer abgewandelten Ausführungsform,

Fig. 3 eine schematische Darstellung einer Steuervorrichtung für eine Kupplung, welche zwischen antriebbaren Achsen eines Kraftfahrzeugs wirksam ist,

Fig. 4 ein Diagramm, in welchem die Abhängigkeit des hydraulischen Druckes in dem zur Betätigung der Kupplung dienenden Hydraulikaggregat in Abhängigkeit von der Drehzahldifferenz zwischen den beiden Getriebeausgängen dargestellt ist,

Fig. 5 ein weiteres Diagramm zur Abhängigkeit zwischen Drehzahldifferenz und Hydraulikdruck, und

Fig. 6 ein Diagramm, welches den Hydraulikdruck in Abhängigkeit vom Verhältnis der Öffnungs- und Schießzeiten eines Steuerventiles wiedergibt.

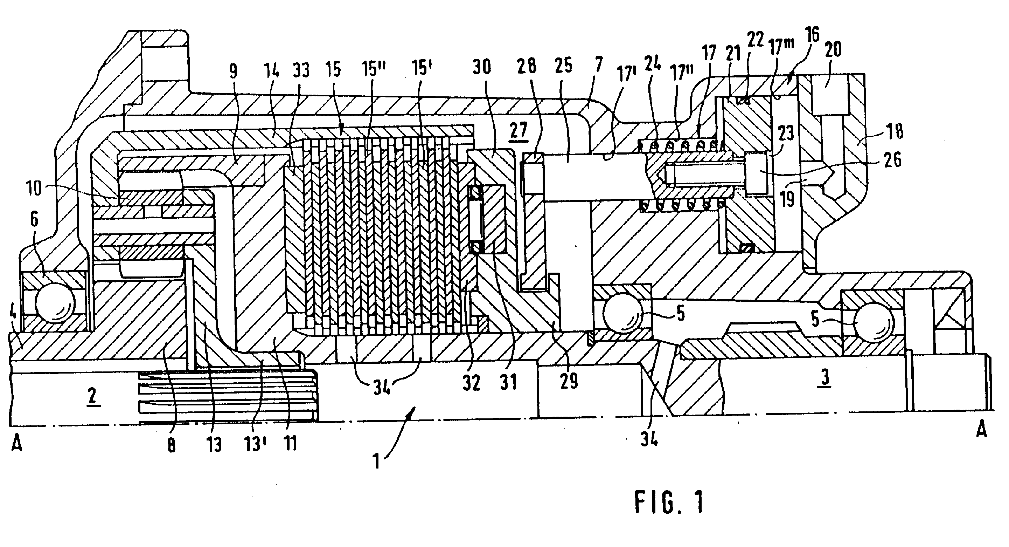

Die Fig. 1 zeigt einen halbseitigen Axialschnitt eines zur Achse A-A im wesentlichen rotations-symmetrischen Getriebes 1.

Das Getriebe 1 besitzt eine Eingangswelle 2 sowie zwei dazu gleichachsige Ausgangswellen 3 und 4, wobei die erste Ausgangswelle 3 in Verlängerung der Eingangswelle 2 und die zweite Ausgangswelle 4 als die Eingangswelle 2 konzentrisch umschließende Hohlwelle angeordnet sind. Dabei ist die Ausgangswelle 3 mittels zweier Lager 5 und die Ausgangswelle 4 mittels eines Lagers 6 am Getriebegehäuse 7 gelagert.

Das Getriebe 1 ist in grundsätzlich bekannter Weise als Planetengetriebe mit einem außenverzahnten Sonnenrad 8, einem innenverzahnten Hohlrad 9 sowie außenverzahnten Planetenrädern 10 aufgebaut. Dabei ist das Sonnenrad 8 undrehbar mit der Ausgangswelle 4 verbunden, während das Hohlrad 9 mittels eines scheibenförmigen Hohlradträgers 11 auf dem zugewandten henlen Endteil der Ausgangswelle 3 angeordnet ist. Die Planetenräder 10, welche in dem Abstandsraum zwischen Sonnenrad 8 und Hohlrad 9 untergebracht sind und mit diesen beiden Rädern kämmen, sind jeweils auf Zapfen 12 angeordnet, welche an ihren in Fig. 1 rechten Enden in entsprechenden Öffnungen eines scheibenförmigen Planetenträgers 13 gelagert sind. Der Planetenträger 13 ist drehfest mit der Eingangswelle 2 verbunden, indem ein am Planetenträger 13 angeformter hülsen- bzw. rohrförmiger Fortsatz 13' mit einer an ihm angebrachten Innenverzahnung in eine Außenverzahnung des von ihm umschlossenen Endes der Eingangswelle 2 eingreift.

Die in Fig. 1 linken Enden der Zapfen 12 der Planetenräder 10 sind in entsprechenden Öffnungen einer ringscheibenförmigen Stirnseite eines Trägerteils, nämlich eines im wesentlichen rohrförmigen Lamellenträgers 14 gelagert, welcher dementsprechend mit dem Planetenträger 13 drehfest verbunden ist. Der Lamellenträger 14 umschließt mit radialem Abstand das Hohlrad 9 und erstreckt sich in axialer Richtung in Fig. 1 nach rechts über den Hohlradträger 11 hinaus, so daß zwischen dem Lamellenträger 14 und dem hohlen hohlradträgerseitigen Ende der Ausgangswell 3 ein Ringraum gebildet wird.

Dieser Ringraum dient zur Aufnahme einer als Mehrscheibenkupplung ausgebildeten Kupplung 15, welche aus miteinander zusammenwirkenden, ringförmigen Kupplungslamellen 15' und 15" aufgebaut ist. Dabei sind die einen Kupplungslamellen 15' am Innenumfang des Lamellenträgers 14 axial verschiebbar, jedoch undrehbar gehalten, während die anderen Kupplungslamellen 15" in entsprechender Welse auf dem Außenumfang der Ausgangswelle 3 axial verschiebbar, jedoch undrehbar gelagert sind. Falls der Lamellenträger 14 und die Ausgangswelle 3 sich relativ zueinander drehen, so erfolgt eine entsprechende Relativbewegung zwischen den mit dem Lamellenträger 14 drehfest verbundenen Kupplungslamellen 15' sowie den mit der Ausgangswelle 3 drehfest verbundenen Kupplungslamellen 15".

Die Kupplung 15 gestattet es, den Lamellenträger 14 und damit die Eingangswelle 4 mit der Ausgangswelle 3 kraft- bzw. reibschlüssig zu kuppeln, wobei indirekt auch die Bewegung der Ausgangswelle 4 beeinflußt wird, weil die Bewegungen jeweils einer der Wellen 2 bis 4 durch die Bewegungen der beiden jeweils anderen Wellen eindeutig bestimmt wird.

Zur Betätigung der Kupplung 15, d.h. zum Schließen bzw. Lösen derselben dient ein parallel zur Achse A-A angeordnetes Fluidaggregat, nämlich ein hydraulisches Kolben-Zylinder-Aggregat 16. Der Zylinderraum dieses Aggregates 16 wird durch eine entsprechende, parallel zur Achse A-A ertreckte, mehrfach gestufte Gehäusebohrung 17 mit einem bezüglich des Durchmessers engen Abschnitt 17', einem Abschnitt 17" mit etwas größerem Durchmesser sowie einem Abschnitt 17''' mit weitem Durchmeser gebildet. Das in Fig. 1 rechte offene Stirnende des letzteren Abschnittes 17''' ist durch eine Zylinderkopfplatte 18 abgedeckt, in der eine zur Achse A-A parallele Sackbohrung 19 sowie eine dazu querverlaufende Sackbohrung 20 miteinander kommunizierend angeordnet sind, derart, daß die Gehäusebohrung 17 mit einer nicht dargestellten Druckleitung verbunden ist, welche an der stufenförmig erweiterten Öffnung der Sackbohrung 20 anschließbar ist.

Im Abschnitt 17''' der Gehäusebohrung 17 ist jeweils ein Kolben 21 verschiebbar geführt und umfangsseitig mit Dichtringen 22 od. dgl. gegenüber der Wandung der Gehäusebohrung 17 abgedichtet. Der Kolben 21 besitzt eine zentrische Axialbohrung 23, welche an beiden Kolbenstirnseiten gegenüber einem engen bundartigen Mittelbereich stüfenförmig erweitert ist.

Im Abschnitt 17" der Gehäusebohrungen 17 ist jeweils eine Schraubenfeder 24 untergebracht, welche zwischen der zugewandten Stirnseite des Kolbens 21 sowie einer davon beabstandeten Ringfläche am stufenförmigen Übergang zwischen den Abschnitten 17' und 17" der Gehäusebohrung 17 eingespannt ist und dementsprechend den Kolben 21 in der Zeichnung nach rechts zu drängen sucht.

Im Abschnitt 17' der Gehäusebohrung 17 ist eine Kolbenstange 25 gleitverschiebbar geführt, welche den Abschnitt 17" der Gehäusebohrung 17 unter Freilassung eines Ringraumes für die Schraubenfeder 24 durchsetzt und mit dem Kolben 21 verbunden ist, indem ihr kolbenseitiges Stirnende in die zugewandte Öffnung der Axialbohrung 23 eingesetzt und am Kolben 21 mittels einer Schraube 26 gehaltert ist, welche dazu vom anderen Ende der Axialbohrung 23 des Kolbens 21 her in eine stirnseitige Gewindesackbohrung der Kolbenstange 25 eingeschraubt ist, so daß die bundartige Verengung der Axialbohrung 23 des Kolbens 21 form- und kraftschlüssig zwischen dem Kopf der Schraube 26 und dem benachbarten Stirnende der Kolbenstange 25 festgehalten ist.

Das vom Kolben 21 jeweils entferntere Ende der Kolbenstange 25 erstreckt sich bis in einen die Kupplung 15 sowie den Lamellenträger 14 umschließenden Innenraum 27 des Getriebegehäuses 7 und ist dort mit einer Druckgabel 28 formschlüssig verbunden. Im Bereich ihrer Mittelöffnung ist die Druckgabel 28 in axialer Richtung etwas verdickt, derart, daß auf der von den Kolbenstangen 25 abgewandten Seite der Druckgabel 28 ein Steg gebildet wird. Die Druckgabel 28 ist im Bereich ihrer Mittelöffnung axial auf einer Muffe 29 gelagert, welche ihrerseits auf der Ausgangswelle 3 verschiebbar angeordnet ist.

An der Muffe 29 ist an dem der Kupplung 15 zugewandten Stirnende eine flanschartige Platte 30 angeordnet, welche von der zugewandten Stirnseite der ringscheibe nartigen Druckgabel 28 einen durch den Ringsteg an der Mittelöffnung der Druckgabel 28 vorgegebenen axialen Abstand aufweist.

Auf der der Kupplung 15 zugewandten Stirnseite der Platte 30 ist eine ringförmige Vertiefung zur Aufnahme eines Nadellagers 31 - oder auch eines Gleitlagers - angeordnet, welches zur axialen Lagerung einer Druckplatte 32 dient, welche zwischen zwei Stegen auf der der Kupplung 15 zugewandten Seite der Platte 30 radial gelagert ist. Die Druckplatte 32 läuft zusammen mit der benachbarten Kupplungslamelle 15'.

Wenn die von der Kolbenstange 25 abgewandte Stirnseite der Kolben 21 mittels eines in der Regel hydraulischen Druckmediums beaufschlagt wird, welches dazu durch die Sackbohrungen 19 und 20 der Zylinderkopfplatte 18 zugeführt wird, so wird der jeweilige Kolben 21 gegen die Schraubenfeder 24 nach links verschoben. Diese Vorschubbewegung wird mittels der Kolbenstange 25 sowie der ringscheibenartigen Druckgabel 28 auf die Muffe 29 übertragen, die dann ihrerseits mittels der flanschartigen Platte 30 über das Nadellager 31 die Druckplatte 32 beaufschlagt und gegen die Kupplungslamellen 15' bzw. 15" der Kupplung 15 vorschiebt. Dementsprechen werden die genannten Kupplungslamellen 15' und 15" axial gegen den Hohlradträger 11 bzw. eine daran kupplungsseitig angeordnete ringförmige Widerlagerscheibe 33 gedrängt. Dementsprechend werden die am Lamellenträger 14 drehfest angeordneten Kupplungslamellen 15' gegen die an der Ausgangswelle 3 drehfest angeordneten Kupplungslamellen 15" gepreßt, so daß eine kraft- und reibschlüssige Verbindung zwischen der Ausgangswelle 3 und dem Lamellenträger 14 und damit der Eingangswelle 2 geschaffen wird. Die Stärke des Kraft- bzw. Reibschlusses ist von der Höhe des die Kolben 21 beaufschlagenden Fluiddruckes abhängig, d.h. mit zunehmendem Fluiddruck wird auch der Kraft- bzw. Reibschluß verstärkt.

Bei entsprechender Minderung des Fluiddruckes können die Schraubenfedern 24 die jeweiligen Kolben 21 in Fig. 1 nach rechts zurückschieben, wobei sich die Kupplungslamellen 15' und 15" voneinander unter Öffnung der Kupplung 15 abheben.

Zur Kühlung und Schmierung der im Innenraum 27 angeordneten Elemente genügt der Ölnebel, welcher sich beim Betrieb des Getriebes 1 bildet, da im Getriebegehause 7 befindliches Öl stark verwirbelt wird. Die Zu- und Abführung des Öles erfolgt über nicht dargestellte Öffnungen des Getriebegehäuses 7 und/oder den in der Ausgangswelle 3 angeordneten Hohlraum, welcher mit dem Innenraum 27 über Radialbohrungen 34 in der Ausgangswelle 3 kommuniziert. Das Öl sorgt auch für einen sanft einsetzenden Kraft-bzw. Reibschluß zwischen den Kupplungslamellen 15' und 15", da das jeweils bei geöffneter Kupplung 15 zwischen die Kupplungslamellen 15' und 15" eingedrungene Öl beim Schließen der Kupplung zunächst aus den Abstandsräumen zwischen den Kupplungslamellen 15' und 15" herausgedrängt werden muß.

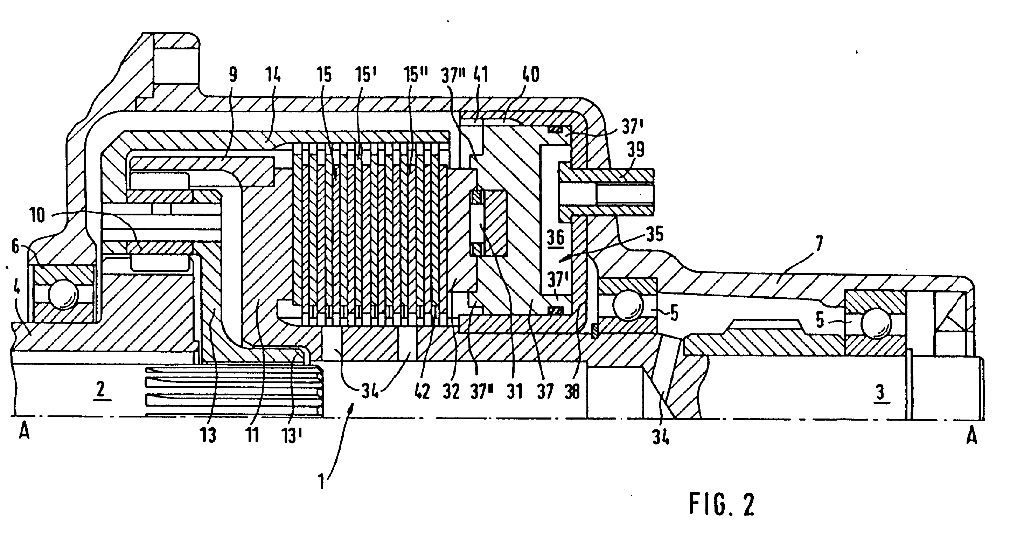

Die in Fig. 2 dargestellte Ausführungsform unterscheidet sich von der Ausführungsform nach Fig. 1 im wesentlichen dadurch, daß anstelle des zur Achse A-A parallel angeordneten Fluid- bzw. Kolben-Zylinder-Aggregates 16 ein einziges Kolben-Zylinder-Aggregat 35 mit koaxial zur Achse A-A angeordnetem ringförmigen Zylinderraum 36 und Ringkolben 37 angeordnet ist.

Dazu ist innerhalb des Getriebegehäuses 7 ein Kolbengehäuse 38 mit der Kupplung 15 zugewandter offener Stirnseite angeordnet. Die andere geschlossene Stirnseite des Kolbengehäuses 38 ist auf einer Radialwand des Getriebegehäuses 7 abgestützt. Die Außenumfangswand des Kolbengehäuses 38 liegt von innen an der Umfangswand des Getriebegehäuses 7 an, während die Innenumfangswand des Kolbengehäuses 38 die Ausgangswelle 3, ohne dieselbe zu berühren, mit geringem Abstand umschließt. In der geschlossenen Stirnseite des Kolbengehäuses 38 ist ein die Wandung des Kolbengehäuses 38 sowie die benachbarte Wandung des Getriebegehäuses 7 durchsetzender Anschlußstutzen 39 für eine nicht dargestellte Druckleitung angeordnet, um ein in der Regel hydraulisches Druckmedium in den Zylinderraum 36 einführen zu können.

Auf der von der Kupplung 15 abgewandten Stirnseite des Ringkolbens 37 ist eine ringförmige Vertiefung angeordnet, so daß im Bereich des Innenumfanges sowie des Außenumfanges jeweils ringförmige, in Achsrichtung des Ringkolbens 37 vorstehende Ringstege 37' gebildet werden. Der zwischen diesen Ringstegen 37' im Kolbenboden freibleibende Raum gewährleistet, daß auch in der in Fig. 2 dargestellten linken Endlage des Ringkolbens 37 hinreichen Platz für das kolbenseitige Ende des Anschlußstutzens 39 verbleibt.

Im übrigen ist auf der Außenumfangsfläche des äußeren Ringsteges 37' und der Innenumfangsfläche des inneren Ringsteges 37' eine Umfangsnut zur Aufnahme von Kolbendichtungen 22 angeordnet.

Der Ringkolben 37 ist innerhalb der Kolbengehäuse 38 undrehbar geführt, indem eine auf der Außenumfangsseite des Ringkolbens 37 angeordnete Verzahnung 40 in eine Verzahnung 41 auf der Innenseite der Außenumfangswand des Kolbengehäuses 38 eingreift. Der Ringkolben 37 läßt sich demnach innerhalb des Kolbengehäuses 38 nur in Richtung der Achse A-A bewegen.

Auf der der Kupplung 15 zugewandten Stirnseite des Ringkolbens 37 ist eine ringförmige Vertiefung zur Aufnahme des Nadellagers 31 oder eines stattdessen angeordneten Gleitlagers angeordnet, welches wiederum zur Axiallagerung der Druckplatte 32 dient, die hier zwischen Ringstegen 37' am Ringkolben 37 radial gelagert bzw. geführt ist. Diese Druckplatte 32 läuft wiederum mit der jeweils benachbarten Kupplungslamelle 15" um.

Im übrigen sind zwischen den auf der Ausgangswelle 3 drehfest angeordneten Kupplungslamellen 15" nahe des Innenumfanges derselben Federringe 42 oder stattdessen sogenannte Sinuslamellen angeordnet, welche die Kupplungslamellen 15″ auseinanderzudrängen suchen, wobei gleichzeitig der Ringkolben 37 nach rechts in die dargestellte Endlage gespannt wird.

Sobald Druckmedium über den Anschlußstutzen 39 in den Zylinderraum 36 mit hinreichendem Druck eingeführt wird, verschiebt sich der Ringkolben 37 nach links und druckt die Kupplungslamellen 15′ und 15″ unter gleichzeitiger Kompression der Federringe 42 zusammen, d.h. die Kupplung 15 wird geschlossen, wobei die Stärke des Reib- bzw. Kraftschlusses der Kupplung 15 von der Stärke des Druckes im Zylinderraum 36 abhängt.

Wird dieser Druck wiederum vermindert, so können die Federringe 42 die Lamellen der Kupplung 15 auseinandertreiben, d.h. die Kupplung wird wiederum geöffnet, wobei gleichzeitig der Ringkolben 37 nach rechts verschoben wird.

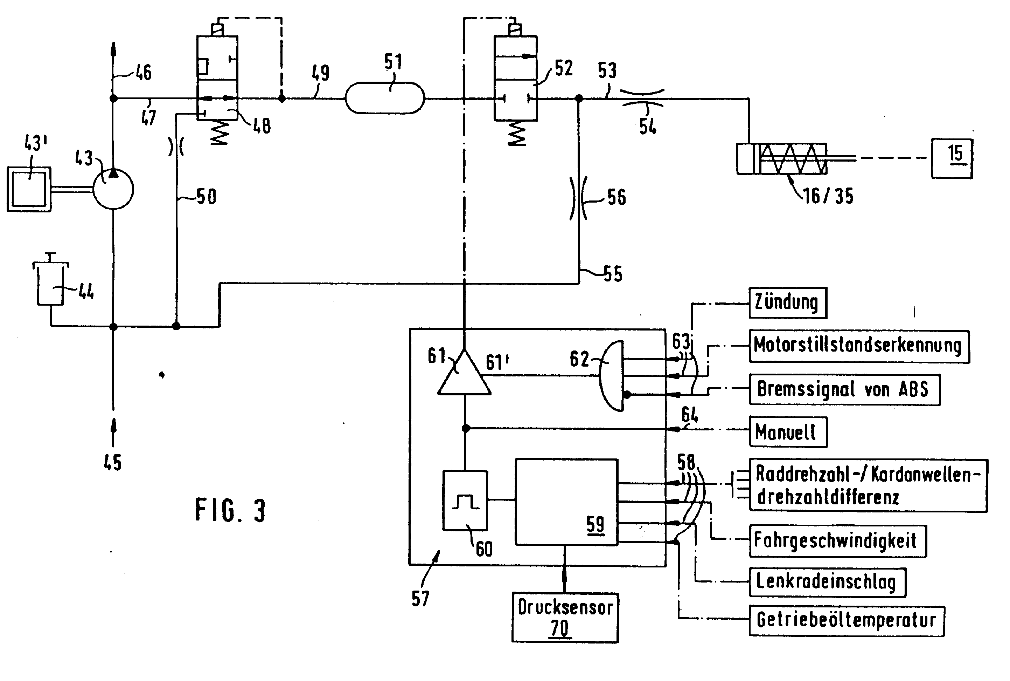

Die Fig. 3 zeigt nun eine eine Steuerschaltung 57 umfassende Steuervorrichtung, mit der der Druck in den Kolben-Zylinder-Aggregaten 16 der Fig. 1 bzw. dem Kolben-Zylinder-Aggregat 35 der Fig. 2 gesteuert verändert werden kann.

Eine als Druckquelle vorgesehene Hydraulikpumpe 43, welche mittels eines Motors 43′ als Druckquelle vorgesehene (z.B. Fahrzeugmotor) angetrieben wird, ist saugseitig mit einem Reservoir 44 sowie einem Rücklauf 45 verbunden, welcher der Hydraulikpumpe 43 von hydraulischen Verbrauchern (nicht dargestellt) zurückfließendes hydraulisches Medium zuführt. Die Druckseite der Hydraulikpumpe 43 ist über eine Druckleitung 46 mit den vorgenannten Verbrauchern verbunden. An die Druckleitung 46 ist eine Abzweigleitung 47 angeschlossen, die zu einem Druckregel- bzw. Druckbegrenzerventil 48 führt, an welches sich dann eine weiterführende Leitung 49 anschließt, die in der Normallage des Druckbegrenzerventiles 48 mit der Abzweigleitung 47 verbunden ist. Sobald der Druck in der weiterführenden Leitung 49 über eine - beispielsweise durch eine Ventilfeder - vorgegebenen Druckschwellwert ansteigt, sperrt das Druckbegrenzerventil 48 die Verbindung zwischen der weiterführenden Leitung 49 und der Abzweigleitung 47, welche dabei gleichzeitig mit einer zur Saugseite der Hydraulikpumpe 43 führenden Umlaufleitung 50 verbunden wird. Diese Umlaufleitung 50 ist gleichzeitig als Drossel ausgebildet, um den Leistungsbedarf der Hydraulikpumpe 43 m Leerlauf zu begrenzen.

Die Leitung 49 führt über einen Druckpulsationen glättenden Druckspeicher 51 zu einem elektromagnetischen Steuerventil 52, welches normalerweise, d.h. ohne elektrische Erregung, unter dem Einfluß einer Feder od. dgl. die dargestellte Schließlage einnimmt, bei Erregung seiner Magneten jedoch öffnet und die Leitung 49 mit einer zu den Kolben-Zylinder-Aggregaten 16 bzw. 35, vgl. die Fig. 1 bzw. 2 führenden Druckleitung 53 verbindet.

Zwischen dem Steuerventil 52 und den Kolben-Zylinder-Aggregaten 16 bzw. 35 ist in der Druckleitung 53 eine Vordrossel 54 angeordnet, die die Schnelligkeit des Druckanstieges bzw. -abfalles im Kolben-Zylinder-Aggregat 16 bzw. 35 beim Öffnen bzw. Schließen des Steuerventiles 52 beeinflußt und bei entsprechender Bemessung ein sanftes Ansprechen der Kupplung 15 bewirkt.

Zwischen der Vordrossel 54 und dem Steuerventil 52 zweigt von der Druckleitung 53 eine zur Saugseite der Hydraulikpumpe 43 führende Rücklauf- oder Abzweigtleitung 55 mit einer Rücklaufdrossel 56 ab.

Der Druck in den Kolben-Zylinder-Aggregaten 16 bzw. 35 kann nun dadurch stufenlos verändert werden, daß das Steuerventil 52 intermittierend aus der dargestellten Schließlage in seine Offenstellung, danach wieder in die Schließlage und sodann wiederum in die Offenstellung usw. gebracht wird. Durch die Rücklaufdrossel 56 fließt nun gleichzeitig Drucköl in den Vorratsbehälter bzw. das Reservoir 44 zurück. Durch die intermittierende Betriebsweise des Steuerventils 52 stellt sich ein mittlere Druck im Kolben-Zylinder-Aggregat 16 bzw. 35 ein, woraus ein mittlerer Anpreßdruck in der Kupplung 15 resultiert.

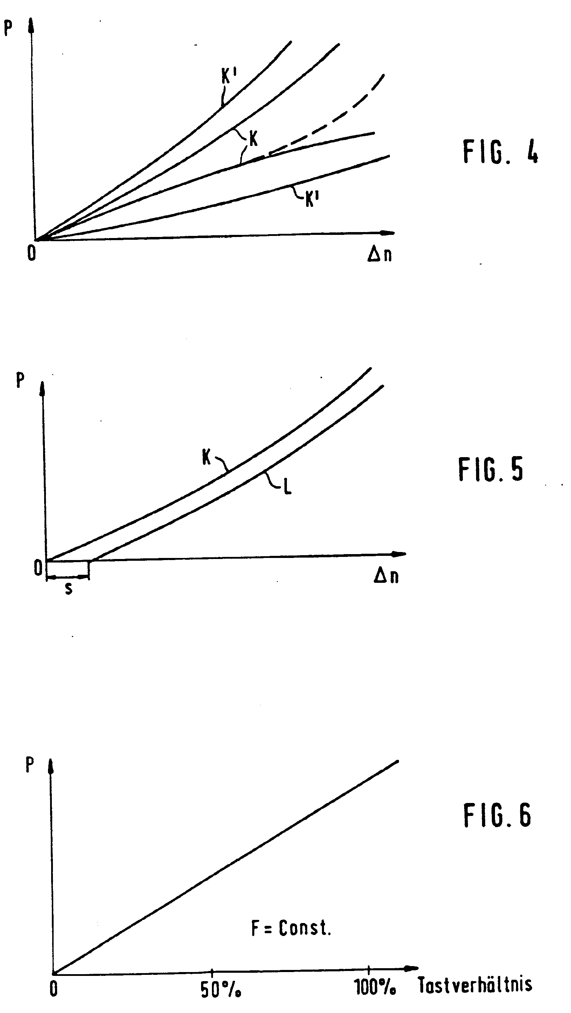

Der sich in den Kolben-Zylinder-Aggregaten 16 bzw. 35 einstellende Druck ist dann eine Funktion des Tastverhältnisses, d.h. des Verhältnisses der Öffnungs- und Schließzeiten. Dies ist beispielhaft in Fig.6 dargestellt. Falls das Steuerventil 52 ständig geschlossen ist, liegt ein Tastverhältnis O vor; bei ständig geöffnetem Steuerventil 52 ergibt sich ein Tastverhältnis von 100 %. Zwischen diesen Randwerten liegende Tastverhältnisse ergeben sich, wenn das Steuerventil 52 mit gleichbleibender Frequenz F unter Variation der Relation zwischen Öffnungs- und Schließzeit in schneller Folge geöffnet und geschlossen wird.

Die beschriebene Steuerung des Steuerventiles 52 erfolgt mittels der in Fig.3 schematisiert wiedergegebenen elektronischen Steuerschaltung 57. Diese Steuerschaltung 57 besitzt mehrere - nicht bevorrechtige - Eingänge 58, die mit nicht dargestellten Sensoren verbunden sind, deren Ausgangssignale die Differenz der Raddrehzahlen an Vorder- und Hinterachse bzw. die Differenz der Drehzahlen der zur Vorder- und Hinterachse führenden Kardanwellen, die Fahrgeschwindigkeit, den Lenkradeinschlag und/oder die Getriebeöltemperatur wiedergeben. Diese an den Eingängen 58 vorliegenden Signale werden von einem Mikroprozessor 59 kennfeldabhängig verarbeitet, welcher einen Impulsgenerator 60 steuert. Dieser erzeugt dann eine Impulsfolge mit zugeordnetem Tastverhältnis, d.h. das zeitliche Verhältnis der aufeinanderfolgenden Impulse und Pausen ist konstant für einen Betriebsfall, aber variabel für verschiedene Betriebsfälle, wobei im Extremfall ein Dauerimpuls bzw. kein Impuls erzeugt werden.

Diese Impulse werden in einem Leistungsverstärker 61 hinreichend verstärkt und sodann an das Steuerventil 52 weitergeleitet, welches entsprechend der Impulsfolge mit unterschiedlichem Tastverhältnis öffnet und schließt.

Die vorbeschriebene Verstärkung der Impulse im Leistungsverstärker 61 erfolgt jedoch nur dann, wenn an einem Steuereingang 61′ des Leistungsverstärkers 61 ein entsprechendes Befehlssignal vorliegt, andernfalls ist der Leistungsverstärker 61 abgeschaltet, d.h. das Steuerventil 52 bleibt dauernd in der in Fig.3 dargestellten Schließlage, bei der die Kolben-Zylinder-Aggregate 16 bzw. 35 drucklos sind bzw. werden, d.h. die Kupplung 15 ist offen oder öffnet.

Der Steuereingang 61′ des Leistungsverstärkers 51 ist mit dem Ausgang eines UND-Gatters 62 verbunden, dessen Eingänge bevorrechtige Eingänge 63 der Steuerschaltung 57 bilden. An einem bevorrechtigten.

Eingang 63 liegt ein Signal an, wenn die Zündung des Fahrzeugmotors eingeschaltet ist. Ein anderer bevorrechtiger Eingang 63 erhält-ein Signal, solange der Fahrzeugmotor läuft. Ein negierter bevorrechtiger Eingang 63 erhält ein Signal, sobald die Fahrzeugbremse, insbesondere eine solche mit Antiblockiersystem, betätigt wird. Dementsprechend kann das UND-Gatter 62 nur dann ein den Leistungsverstärker 61 einschaltendes Ausgangssignal erzeugen, wenn der Fahrzeugmotor läuft, die Zündung eingeschaltet ist und die Fahrzeugbremse nicht betätigt wird. In allen anderen Fällen erzeugt das UND-Gatter 62 kein Ausgangssignal, und der Leistungsverstärker 61 bleibt abgeschaltet.

Dies ist gleichbedeutend damit, daß das Steuerventil 52 ausschließlich dann angesteuert wird, wenn bei unbetätigter Fahrzeugbremse die Zündung eingeschaltet ist und der Motor läuft, nur in diesem Falle kann also in den Kolben-Zylinder-Aggregaten 16 bzw. 35 zur Betätigung der Kupplung 15 (vgl. Fig. 1 oder 2) ein Betätigungsdruck aufgebaut werden, welcher vom Tastverhaltnis der vom Impulsgenerator 60 erzeugten und durch den Leistungsverstärker 61 verstärkten Impulse abhangt. Darüber hinaus ist nur in diesem Falle eine manuelle Beeinflussung des Steuerventiles 52 über einen Eingang 64 der Steuerschaltung 57 möglich. Erhält dieser Eingang 64 ein beispielsweise mittels eines nicht dargestellten Schalters erzeugtes Dauersignal, so wird dasselbe vom Leistungsverstärker 61 nur bei vorhandenem Signal am Steuereingang 61′ verstärkt, wodurch das Steuerventil 52 in sein Offenstellung gebracht wird.

Die Fig.4 und 5 zeigen nun beispielhaft, in welcher Weise der hydraulische Druck P in den Kolben-Zylinder-Aggregaten 16 bzw. 35 kennfeldabhängig mit der Drehzahldifferenz $\Delta n$ zwischenden Vorder- und Hinterradern eines Fahrzeuges gesteuert werden kann.

Die in Fig.4 dargestellten Kurven K steigen mit zunehmender Drehzahldifferenz $\Delta n$ an, d.h. der Druck P in den Kolben-Zylinder-Aggregaten 16 bzw. 35 wächst in entsprechender Weise. Mit dem Druck P steigen gleichzeitig die Betätigungskraft der Kupplung 15 sowie das von ihr übertragene Moment an.

Dabei ist zu berücksichtigen, daß das übertragene Moment auch von der Getriebeöltemperatur abhängt, indem der Kraft- bzw. Reibschluß zwischen aufeinanderliegenden Kupplungslamellen 15′ und 15″ bei gleicher Betätigungskraft der Kupplung, d.h. bei gleichen Andruckkräften zwischen den Lamellen, mit zunehmender Öltemperatur ansteigt. Aufgrund von Erwärmung wird nämlich das Getriebeöl dünnflüssiger, mit der Folge, daß es zwischen benachbarten Kupplungslamellen 15′ und 15″ unter Erhöhung der Lamellenreibung leichter herausgedrängt werden kann. Dieser Effekt kann beispielsweise dadurch kompensiert werden, daß die Steuerung des hydraulischen Druckes P in den Kolben-Zylinder-Aggregaten 16 bzw. 35 bei niedriger Öltemperatur etwa entsprechend der Kurve K′ und bei hoher Öltemperatur entsprechend der Kurve K″ erfolgt. Die dazwischenliegenden Kurven K zeigen die Verhältnisse bei anderen Temperaturen.

Im übrigen ist es erwünscht, bei höheren Fahrgeschwindigkeiten und/oder größeren Lenkradeinschlägen größere Drehzahldifferenzen $\Delta n$ zwischen den Vorder- und Hinterrädern zuzulassen. Dies kann beispielsweise entsprechend der Fig. 5 dadurch erfolgen, daß die Steuerung des hydraulischen Druckes P in den Kolben-Zylinder-Aggregaten 16-bzw. 35 in Abhängigkeit von der Drehzahldifferenz $\Delta n$ gemäß-einer Kurve L erfolgt, welche gegenüber einer Kurve K bei größeren Fahrgeschwindigkeiten und/oder größeren Lenkradeinschlägen um einen entsprechend größeren Abstand s nach rechts verschoben ist. Wenn also, was hier angenommen sei, die Kurve K in Fig. 5 die Verhältnisse bei sehr geringer Fahrgeschwindigkeit und geringen Lenkradeinschlägen wiedergibt, so wird die Kupplung 15 bei einer Steuerung gemäß der Kurve L erst bei größeren Drehzahldifferenzen $\Delta n$ ausgewählt.

Der Abstand s ist also auch ein Maß für den von der Steuerschaltung 57 kennfeld- bzw. parameterabhängig zugelassenen Schlupf der angetriebenen Räder einer Achse gegenüber denjenigen einer anderen angetriebenen Achse.

Nachdem die Steuerschaltung 57 bzw. der Mikroprozessor 59, vgl. Fig.3, eine Kennlinie ausgewählt haben, erfolgen eine Überprüfung bzw. Korrektur derselben über einen Drucksensor 70, welcher ein dem Kupplungsdruck entsprechendes Signal erzeugt, beispielsweise durch Messung des Druckes im Kolben-Zylinder-Aggregat 16 bzw. 35. Sobald sich ein Gleichlauf der Antriebsräder bzw. -achsen eingestellt hat, wird der Öldruck durch entsprechende Ansteuerung des Steuerventiles 52 stufenweise abgebaut. Falls sich keine Änderung im Gleichlauf der Antriebsräder bzw. -achsen ergibt, erfolgt der Druckabbau bis zur Druckiosigkeit. Sollte sich dagegen eine Änderung des Gleichlaufes ergeben, wird der Öldruck und damit der Anpreßdruck der Kupplung sofort auf das dem Betriebsfall entsprechende Druckniveau angehoben.

Gegebenenfalls kann die Steuerschaltung 57 auch zur Ausführung eines Notlaufprogrammes ausgebildet sein. Dabei wird dem Steuerventil 52 eine Impulsfolge mit festem Tastverhältnis zugeführt. Dementsprechend stellt sich in den hydraulischen Kolben-Zylinder-Aggregaten 16 bzw. 35 ein praktisch gleichbleibender Druck ein, d.h. eine parameterabhängige Steuerung der von den Aggregaten 16 bzw. 35 ausgeübten Stellkräfte unterbleibt.

Abweichend von den in den Fig.1 und 2 dargestellten Ausführungsformen können die Kupplung 15 sowie die die Kupplung betätigenden Kolben-Zylinder-Aggregate 16 bzw. 35 auch auf der anderen Seite des Planetengetriebes 8 bis 10 angeordnet sein, wobei dann die vom Lamellenträger 14 getragenen Kupplungslamellen mit an der Ausgangswelle 4 angeordneten Lamellen zusammenwirken und. eine unmittelbare kraft- bzw. reibschlüssige Kopplung von Eingangswelle 2 und Ausgangswelle 4 gestatten.

Außerdem kann der Lamellenträger 14 auf der in den Fig.1 und 2 linken Seite des Planetengetriebes 8 bis 10 als Fortsetzung des Hohlrades 9 bzw. als damit verbundenes Teil angeordnet sein, wobei dann die am Lamellenträger 14 angeordneten Lamellen wiederum mit auf der Ausgangswelle 4 angeordneten Lamellen zusammenwirken. In diesem Falle bewirkt die Kupplung eine kraft- bzw. reibschlüssige Verbindung zwischen den beiden Ausgangswellen 3 und 4.

Im übrigen ist die Erfindung nicht auf Getriebeanordnungen nach Art von Ausgleichs- bzw. Differentialgetrieben beschränkt. Gegebenenfalls kann die Eingangswelle permanent lediglich eine Ausgangswelle antreiben, während die andere Ausgangswelle nur bei geschlossener Kupplung von der Eingangswelle oder der permanent angetriebenen Ausgangswelle angetrieben, bei geöffneter Kupplung jedoch antriebslos ist.

Bei allen beschriebenen Ausführungsformen erfolgt die Steuerung der Kupplung in prinzipiell gleicher Weise, indem die Kupplung bei zunehmenden Drehzahldifferenzen zwischen den Ausgangswellen mit zunehmender, kennfeldabhängig gesteuerter Kraft geschlossen wird. Die Kennfeldsteuerung berücksichtigt dabei im Falle von Kraftfahrzeugen insbesondere die Fahrgeschwindigkeit sowie den Lenkwinkel, d. h bei größerer Fahrgeschwindigkeit und/oder größeren Lenkwinkeln wird eine erhöhte Drehzahldifferenz zwischen den Ausgangswellen zugelassen, bevor die Kupplung betätigt wird. Außerdem wird grundsätzlich die Öltemperatur berücksichtigt, um deren Einfluß auf den Reibwert der Kupplungslamellen zu kompensieren, d. h. bei höherer Öltemperatur wird die Kupplung mit geringerer Stellkraft betätigt.

In Verbindung mit Kraftfahrzeugen ist bei allen Ausführungsformen besonders wesentlich, daß die Kupplung bei Betätigung der Fahrzeugbremse in jedem Falle geöffnet wird, da damit die Möglichkeit der Anordnung eines üblichen Antiblockiersystemes für die Fahrzeugbremse gegeben ist. Aufgrund der beim Bremsen geöffneten Kupplung braucht bei der Regelung des Antiblockiersystemes keinerlei antriebsmäßige Kopplung zwischen Rädern unterschiedlicher Achsen berücksichtigt zu werden.

Außerdem soll sich die Kupplung bei Fahrzeugstillstand und/oder bei Stillstand des Motors bzw. - im Falle von Motoren mit Fremdzündung - bei Ausfall der Zündung öffnen. Dadurch wird ein gegebenenfalls notwendiges Abschleppen des Fahrzeuges erleichtert. Insbesondere ist es damit ohne weiteres möglich, das Fahrzeug auf einer Achse, d. h mit angehobenen übrigen Achsen abzuschleppen. Im übrigen werden durch Öffnen der Kupplung bei Fahrzeugstillstand Verspannungen im Antriebssystem unterbunden.

**Patentansprüche**

1. Getriebeanordnung mit mehreren-insbesondere zwei-mit einem Getriebeeingang antriebsmäßig verbundenen bzw. verbindbaren, unterschiedlichen Achsen eines Kraftfahrzeuges zugeordneten Getriebeausgängen, einer manuell oder automatisch zuschaltbaren Kupplung (15), welche eine Differenz zwischen den Abtriebsgeschwindigkeiten bzw. -drehzahlen der Getriebeausgänge zu vermindern bzw. zu unterbinden gestattet, einem die Kupplung (15) betätigenden und mittels einer Ventilanordnung (52) steuerbaren Fluidaggregat (16,35) sowie einer die Ventilanordnung (52) betätigenden Steuerschaltung (57), welche zur parameterabhängigen Regelung bzw. Steuerung des Fluidaggregates (16,35) in Abhängigkeit vom Verhältnis der Geschwindigkeiten bzw. Drehzahlen der Getriebeausgänge bzw. Fahrzeugräder und vom Lenkwinkel mehrere nicht bevorrechtigte Eingänge (58) für entsprechende Sensoren oder dergleichen besitzt und ferner wenigstens einen bevorrechtigten Eingang (63) aufweist, der mit einem Sensor verbunden ist, der bei einer Betätigung einer mit einem Antiblockiersystem versehenen Fahrzeugbremse ein die Kupplung lösendes Signal liefert,

dadurch **gekennzeichnet**, daß als Ventilanordnung (52) ein zwischen einer Offenstellung und einer Schließstellung pulsierendes Magnetventil vorgesehen ist, und daß die Steuerschaltung (57) das zeitliche Verhältnis (Tastverhältnis) zwischen diesen beiden Stellungen in Abhängigkeit von den Signalen an den nicht bevorrechtigten Eingängen (58) kennfeldabhängig steuert, soweit nicht ein die Kupplung (15) lösendes übergeordnetes Signal an einem bevorrechtigten Eingang (63) vorliegt.

2. Getriebeanordnung nach Anspruch 1,
dadurch **gekennzeichnet**, daß die Steuerschaltung (57) weitere bevorrechtigte Eingänge (63) besitzt, die mit Sensoren verbunden sind, welche diesen bevorrechtigten Eingängen (63) ein die Kupplung (15) lösendes Signal zuführen, wenn der Fahrzeugmotor stillsteht und/oder die Zündung ausgeschaltet ist.

3. Getriebeanordnung nach Anspruch 1 oder 2,
dadurch **gekennzeichnet**, daß die nicht bevorrechtigten Eingänge (58) mit Sensoren oder dergleichen verbunden sind, deren Signale neben der Drehzahldifferenz zwischen Rädern unterschiedlicher Achsen eines Fahrzeuges und dem Lenkeinschlag die Fahrgeschwindigkeit und/oder die Getriebeöltemperatur wiedergeben, und daß die Steuerschaltung (57) das Steuerventil (52) in Abhängigkeit von diesen Signalen betätigt, sofern nicht ein die Kupplung (15) lösendes übergeordnetes Signal vorliegt.

4. Getriebeanordnung nach einem der Ansprüche 1 bis 3,
dadurch **gekennzeichnet**, daß bei zunehmendem Lenkradeinschlag und/oder zunehmender Fahrgeschwindigkeit eine zunehmende Drehzahldifferenz zwischen den Getriebeausgängen (3, 4) zugelassen wird.

5. Getriebeanordnung nach einem der Ansprüche 1 bis 4,
dadurch **gekennzeichnet**, daß eine nasse Kupplung (15) angeordnet ist und die die Kupplung betätigende Kraft bei steigender Öltemperatur im Getriebe (1) vermindert wird.

6. Getriebeanordnung nach einem der Ansprüche 1 bis 5,
dadurch **gekennzeichnet**, daß in einer ausgangsseitig des Steuerventiles (52) angeschlossenen, zum Fluidaggregat (16, 35) führenden Druckleitung (53) eine Drossel (54) und zwischen dieser Drossel (54) und dem Steuerventil (52) eine gedrosselte Abzweigleitung (55, 56) angeordnet sind, welche zur Niederdruckseite des das Steuerventil (52) umfassenden Fluidsystems führt.

7. Getriebeanordnung nach einem der Ansprüche 1 bis 6,
dadurch **gekennzeichnet**, daß das Steuerventil (52) eingangsseitig über ein Druckbegrenzerventil (48) sowie einen zwischen Druckbegrenzerventil (48) und Steuerventil (52) zur Glättung von Druckpulsationen angeordneten Druckspeicher (51) mit der Druckseite einer Druckquelle bzw. -pumpe (43) verbunden ist.

8. Getriebeanordnung mit mehreren - insbesondere zwei - mit einem Getriebeeingang antriebsmäßig verbundenen bzw. verbindbaren Getriebeausgängen sowie einer manuell und/oder automatisch zuschaltbaren Kupplung bzw. Sperre, welche eine ggf. auftretende Differenz zwischen den Antriebsgeschwindigkeiten bzw. -drehzahlen der Getriebeausgänge zu vermindern oder zu unterbinden gestatten, nach einem der Ansprüche 1 bis 7, dadurch **gekennzeichnet**, daß das Getriebe als Ausgleichs- bzw. Differentialgetriebe mit drei Wellen (2 bis 4) ausgebildet ist, wobei die Verdrehungen jeweils zweier Wellen beliebig und unabhängig voneinander erfolgen können, während die Verdrehung der jeweils dritten Welle durch die der beiden anderen Wellen festgelegt ist, und daß die Kupplung (15) bzw. Sperre zwischen der als Getriebeeingang angeordneten Welle (2) und einer der beiden die Getriebeausgänge bildenden Wellen (3, 4) angeordnet ist.

9. Getriebeanordnung nach Anspruch 8,
dadurch **gekennzeichnet**, daß als Getriebe ein gleichachsiges Planetengetriebe mit zwischen einem Sonnenrad (8) und einem Hohlrad (9) umlaufenden Planeten (10) angeordnet ist, daß die Eingangswelle (2), welche den Planetenträger (13) treibt, koaxial innerhalb einer mit dem Sonnenrad (8) verbundenen Ausgangswelle (4) angeordnet und die auf der von der genannten Ausgangswelle (4) abgewandten Seite des Planetenträgers (13) angeordnete andere Ausgangswelle (3) mit dem Hohlrad (9) verbunden ist, und daß am Planetenträger (13) ein das Hohlrad (9) koaxial umgreifender Tragteil (14) zur Halterung von Kupplungslamellen (15′) angeordnet ist, die relativ zum Tragteil (14) bzw. Planetenträger (13) undrehbar sind und mit weiteren Kupplungslamellen (15″) zusammenwirken, welche auf der anderen Ausgangswelle (3) bzw. einem damit verbundenen Teil gegenüber dieser Ausgangswelle (3) undrehbar angeordnet sind.

10. Getriebeanordnung nach Anspruch 9,
dadurch **gekennzeichnet**, daß die Kupplungslamellen (15′, 15″) zwischen der mit der anderen Ausgangswelle (3) verbundenen Stirnseite des Hohlrades (9) bzw. einem dort angeordneten Widerlager (33) sowie einer davon axial beabstandeten, mit den Lamellen umlaufenden Druckplatte (32) angeordnet sind, welche zur reibschlüssigen Kupplung der Lamellen (15, 15″) mittels des Fluidaggregates (16, 35) gegen die Kupplungslamellen (15, 15″) verschiebbar angeordnet und gegenüber einem diesen Vorschub ausführenden Betätigungsorgan (28, 29; 37) des Fluidaggregates (16, 35) mittels eines Axiallagers (31) drehbar abgestützt ist.

11. Getriebeanordnung nach Anspruch 10,
dadurch **gekennzeichnet**, daß als Betätigungsorgan eine koaxial zur anderen Ausgangswelle (3) angeordnete Muffe (29) angeordnet ist, welche antriebsmäßig mit einem Kolben bzw. einer Kolbenstange (21, 25) eines parallel zur Getriebeachse (A-A) als Fluidaggregat zugeordneten Kolben-Zylinder-Aggregates (16) verbunden ist.

12. Getriebeanordnung nach Anspruch 10,
dadurch **gekennzeichnet**, daß als Betätigungsorgan ein in einem ringförmigen Kolbengehäuse (38) im Getriebegehäuse (7) axial verschiebbarer, jedoch undrehbar untergebrachter Ringkolben (37) koaxial zur Getriebeachse (A-A) angeordnet ist, welcher die Druckplatte (32) über das zwischengeschaltete Axiallager (31) unmittelbar beaufschlagt.

13. Getriebeanordnung nach einem der Ansprüche 9 bis 12,
dadurch **gekennzeichnet**, daß zwischen je zwei am Tragteil (14) und/oder an der anderen Ausgangswelle (3) bzw. einem damit verbundenen Teil angeordneten Lamellen (15', 15'') ein Federteil, z.B. Federring oder Sinuslamelle, angeordnet ist, welches die Lamellen (15', 15'') auseinanderzutreiben sucht.

## Claims

1. Gear assembly with several, particularly two, gear outputs which are or can be connected to a gear input for drive purposes and which are associated with different axles of a motor vehicle, a manually or automatically connectable clutch (115) which makes it possible to reduce or eliminate a difference between the driven speeds or revolutions of the gear outputs, a fluid assembly (16,35) which operates the clutch (15) and can be controlled by means of a valve assembly (52), and a control circuit (57) which operates the valve assembly (52) and has several non-priority inputs (58) for corresponding sensors or the like for parameter-dependent regulation or control of the fluid assembly (16,35) as a function of the ratio of speeds or revolutions of the gear outputs or vehicle wheels and the steering angle, and which also has a priority input (63) which is connected to a sensor which on operating a vehicle brake provided with an anti-blocking system supplies a signal which releases the clutch, **characterised** in that the valve assembly (52) is a magnetic valve pulsating between an open and a closed position and that the control circuit (57) according to performance characteristics controls the time ratio (duty cycle) between these two positions in response to the signals at the non-priority inputs (58) so long as there is no overriding signal at a priority input (63) which releases the clutch (15).

2. Gear assembly according to claim 1,
**characterised** in that the control circuit (57) has additional priority inputs (63) which are connected to sensors which feed a signal releasing the clutch (15) to these priority inputs (63) when the vehicle engine is at a standstill and/or the ignition is switched off.

3. Gear assembly according to claim 1 or 2,
**characterised** in that the non-priority inputs (58) are connected to the sensors or the like whose signals, in addition to the speed difference between wheels of different axles of a vehicle and the steering wheel lock, reproduce the travelling speed and/or the gear oil temperature, and the control circuit (57) operates the control valve (52) as a function of these signals so long as there is no overriding signal which releases the clutch (15).

4. Gear assembly according to one of the claims 1 to 3,
**characterised** in that with increasing steering wheel lock and/or increasing travelling speed, an increasing speed difference between the gear outputs (3, 4) is allowed.

5. Gear assembly according to any of claims 1 to 4,
**characterised** in that a wet clutch (15) is provided and the force operating the clutch is reduced with increasing oil temperature in the gearbox (1).

6. Gear assembly according to any of claims 1 to 5,
**characterised** in that in a pressure pipe (53) connected to the output side of the control valve (52) and leading to the fluid assembly (16,35) is mounted a throttle (54) and between this throttle (54) and the control valve (52) is mounted a throttled branch pipe (55, 56) which leads to the low-pressure side of the fluid system encompassing the control valve (52).

7. Gear assembly according to any of claims 1 to 6,
**characterised** in that on the input side the control valve (52) is connected by a pressure limiter valve (48) and pressure accumulator (51) mounted between pressure limiter valve (48) and control valve (52) to smooth out pressure pulsations, to the pressure side of a pressure source or pump (43).

8. Gear assembly with several, particularly two, gear outputs which are or can be connected to a gear input for drive purposes and a manually and/or automatically connectable clutch or lock which makes it possible to reduce or eliminate any difference arising between the driven speeds or revolutions of the gear outputs, according to any of claims 1 to 7,
**characterised** in that the gearbox is designed as an equalising or differential gear with three shafts (2 to 4) respectively, wherein rotation of respectively any two shaft can take place in any fashion and independently of each other, while rotation of respectively the third shaft is fixed by that of the other two shafts, and the clutch (15) or lock is mounted between the shaft (2) arranged as the gear input and one of the two shafts (3,4) forming the gear outputs.

9. Gear assembly according to claim 8,

**characterised** in that a coaxial planetary gear mechanism with planets (10) rotating between a sun wheel (8) and an annulus (9) is arranged as the gear mechanism, the input shaft (2) which drives the planet support (13) is mounted coaxially within the output shaft (4) connected to the sun wheel (8), and the other output shaft (3) mounted on the side of the planet support (13) remote from the aforementioned output shaft (4) is connected to the annulus (9), and on the planet support (13) is mounted a supporting portion (14) coaxially encompassing the annulus (9) for holding the clutch plates (15′) which are non-rotatable relative to the supporting portion (14) or planet support (13) and cooperate with additional clutch plates (15″) which are mounted non-rotatably on the other output shaft (3) or a component connected thereto, relative to this output shaft (3).

10. Gear assembly according to claim 9,

**characterised** in that the clutch plates (15′,15″) are mounted between the face of the annulus (9) connected to the other output shaft (3) or an abutment (33) mounted there, and a pressure plate (32) which is axially spaced apart therefrom and rotates with the plates and which is slidable towards the clutch plates (15′,15″) for frictional coupling of the clutch plates (15′,15″) by means of the fluid assembly (16,35) and supported rotatably by means of a thrust bearing (31) relative to an operating member (28,29; 37) of the fluid assembly (16,35) which performs this advance motion.

11. Gear assembly according to claim 10,

**characterised** in that as the operating member there is provided a sleeve (19) which is arranged coaxially with the other output shaft (3) and which is connected for drive purposes to a piston-cylinder assembly (16) arranged parallel to the gear axis (A-A) as the fluid assembly.

12. Gear assembly according to claim 10,

**characterised** in that as the operating member an annular piston (37) which is accommodated axially slidably but non-rotatably in an annular piston housing (38) in the gear housing (7) is mounted coaxially to the gear axis (A-A), and acts directly on the pressure plate (32) via the intermediate thrust bearing (31).

13. Gear assembly according to any of claims 9 to 12,

**characterised** in that between every two plates (15′,15″) mounted on the supporting portion (14) and/or on the other output shaft (3) or a component connected thereto is disposed a spring portion, e.g. spring washer or sinus plate, which seeks to bias the plates (15′,15″) apart.

**Revendications**

1. Transmission comprenant plusieurs, en particulier deux sorties reliées ou pouvant être reliées du point de vue de l'entraînement à une entrée de transmission et associées à différents essieux d'un véhicule automobile, un embrayage (15) qui peut être enclenché manuellement et/ou automatiquement et qui permet de réduire ou d'éliminer une différence entre les vitesses de sortie des sorties de la transmission, un groupe à fluide (16, 35) qui actionne l'embrayage (15) et peut être commandé à l'aide d'un agencement de valve (52) ainsi qu'un circuit de commande (57) qui actionne l'agencement de valve (52) et possède pour la régulation ou commande, en fonction de paramètres, du groupe à fluide (16, 35) en fonction du rapport des vitesses des sorties de la transmission ou des roues du véhicule et de l'angle de braquage des roues directrices, plusieurs entrées (58) plusieurs entrées non privilégiées pour des capteurs correspondants ou analogues et comporte en outre au moins une entrée privilégiée (63) qui est reliée à un capteur qui fournit à l'entrée privilégiée (63) un signal déclenchant l'embrayage (15) lorsque le frein de véhicule muni d'un système d'antiblocage est actionné,

**caractérisée** en ce qu'il est prévu comme agencement de valve (52) une électrovanne qui oscille entre une position d'ouverture et une position de fermeture et en ce que le circuit de commande (57) commande en fonction de courbes caractéristiques le rapport de temps (rapport cyclique) entre ces deux positions en fonction des signaux disponibles aux entrées non privilégiées (58) dans la mesure où aucun signal prioritaire déclenchant l'embrayage (15) n'est présent à une entrée (63) privilégiée.

2. Transmission selon la revendication 1,

**caractérisée** en ce que le circuit de commande (57) possède d'autres entrées privilégiées (63) qui sont reliées à des capteurs qui fournissent à cette entrée privilégiée (63) un signal déclenchant l'embrayage (15) lorsque le moteur de véhicule est arrêté et/ou lorsque l'allumage est coupé.

3. Transmission selon la revendication 1 ou 2,

**caractérisée** en ce que les entrées non privilégiées (58) sont reliées à des capteurs ou analogues dont les signaux restituent, outre la différence de vitesse de rotation entre les roues de différents essieux d'un véhicule et l'angle de braquage des roues directrices, la vitesse de déplacement du véhicule et/ou la température de l'huile de la transmission et en ce que le circuit de commande (57) actionne la valve de commande (52) en fonction de ces signaux, en absence de signal prioritaire déclenchant l'embrayage (15).

4. Transmission selon l'une des revendications 1 à 3,

**caractérisée** en ce que, lorsque l'angle de braquage des roues directrices et/ou la vitesse de déplacement du véhicule augmentent, une différence de vitesse accrue est admise entre les sorties (3, 4) de la transmission.

5. Transmission selon l'une des revendications 1 à 4,

**caractérisée** en ce qu'elle comprend un embrayage humide (15) et que la force actionnant l'embrayage est réduite lorsque la température de l'huile augmente dans la transmission (1).

6. Transmission selon l'une des revendications 1 à 5,

**caractérisée** en ce qu'une restriction (54) est disposée dans une conduite sous pression (53) raccordée du côté sortie de la valve de commande (52) et conduisant au groupe à fluide (16, 35) et qu'une conduite restreinte de ramification (55, 56) qui mène au côté basse pression du système à fluide comprenant la valve de commande (52), est disposée entre cette restriction (54) et la valve de commande (52).

7. Transmission selon l'une des revendications 1 à 6,

**caractérisée** en ce que la valve de commande (52) est reliée, côté entrée, au côté refoulement d'une source de pression ou d'une pompe refoulante (43) par l'intermédiaire d'un limiteur de pression (48) ainsi que d'un accumulateur de pression (51) disposé entre le limiteur de pression (48) et la valve de commande (52) pour lisser des pulsations de pression.

8. Transmission comprenant plusieurs, en particulier deux sorties reliées ou pouvant être reliées du point de vue de l'entraînement à une entrée de transmission ainsi qu'un embrayage qui peut être enclenché manuellement ou automatiquement et qui permet de réduire ou d'éliminer une éventuelle différence entre les vitesses de sortie des sorties de la transmission, selon l'une des revendications 1 à 8,

**caractérisée** en ce que la transmission est réalisée sous forme de différentiel avec trois arbres (2 à 4), les rotations de deux arbres pouvant s'effectuer d'une manière quelconque et indépendamment l'une de l'autre, tandis que la rotation du troisième arbre est déterminée par celle des deux autres arbres, et en ce que l'embrayage (15) est disposé entre l'arbre (2) formant l'entrée du différentiel et l'un des deux arbres (3, 4) formant les sorties du différentiel.

9. Transmission selon la revendication 8,

**caractérisée** en ce qu'elle comprend un train planétaire équiaxe comportant des satellites (10) tournant entre une roue planétaire (8) et une couronne (9), en ce que l'arbre d'entrée (2) qui entraîne le porte-satellites (13) est disposé coaxialement à l'intérieur d'un arbre de sortie (4) relié à la roue planétaire (8) et que l'autre arbre de sortie (3) disposé sur le côté du porte-satellites (13) opposé audit arbre de sortie (4) est relié à la couronne (9) et en ce qu'une pièce de support (14) enveloppant coaxialement la couronne (9) est disposée sur le porte-satellites (13) pour soutenir des disques d'embrayage (15′) qui sont solidaires en rotation de la pièce de support (14) et du porte-satellites (13) et coopèrent avec d'autres disques d'embrayage (15″) qui sont solidaires en rotation de l'autre arbre de sortie (3) ou d'une pièce reliée audit arbre (3).

10. Transmission selon la revendication 9,

**caractérisée** en ce que les disques d'embrayage (15′, 15″) sont disposés entre le côté frontal de la couronne (9) relié à l'autre arbre de sortie (3) ou entre une butée (33) s'y trouvant et une plaque de pression (32) qui est espacée axialement de la butée, tourne avec les disques, est mobile en translation en direction des disques d'embrayage (15′), 15″) pour coupler par frottement les disques (15′, 15″) à l'aide du groupe à fluide (16, 35) et prend appui par un roulement axial (31), avec possibilité de rotation, contre un organe de manoeuvre (28, 29 ; 37) du groupe à fluide (16, 35) effectuant cette translation.

11. Transmission selon la revendication 10,

**caractérisée** en ce que l'organe de manoeuvre est constitué par un manchon (29) qui est disposé coaxialement à l'autre arbre de sortie (3) et est relié du point de vue de l'entraînement à un piston ou une tige de piston (21, 25) d'un groupe cylindre-piston (16) disposé parallèlement à l'axe (A-A) de la transmission et constituant le groupe à fluide.

12. Transmission selon la revendication 10,

**caractérisée** en ce que l'organe de manoeuvre est constitué par un piston annulaire (37) qui est disposé parallèlement à l'axe (A-A) de la transmission, est logé dans un carter annulaire de piston (38) dans le carter de transmission (7) de manière à pouvoir être déplacé en translation axiale tout en étant immobilisé en rotation, et agit directement sur la plaque de pression (32) par le roulement axial (31) intermédiaire.

13. Transmission selon l'une des revendications 9 à 12,

**caractérisée** en ce qu'une pièce de ressort, telle qu'une rondelle élastique ou une lamelle sinusoïdale, par exemple, qui cherche à écarter les disques (15′, 15″), est disposée entre deux disques (15′, 15″) disposés sur la pièce de support (14) et/ou sur l'autre arbre de sortie (3) ou une pièce reliée audit arbre (3).

FIG. 1

EP 0 216 318 B2

14

FIG. 2

15

16 / 35

Zündung

Motorstillstandserkennung

Bremssignal von ABS

Manuell

Raddrehzahl-/Kardanwellen-drehzahldifferenz

Fahrgeschwindigkeit

Lenkradeinschlag

Getriebeöltemperatur

54

53

52

56

55

63

64

58

62

59

Drucksensor
70

61'

61

60

57

51

49

48

50

46

47

43

43'

44

45

FIG. 3

P

K'

K

K'

0

Δn

FIG. 4

P

K

L

0

s

Δn

FIG. 5

P

F = Const.

0

50%

100%

Tastverhältnis

FIG. 6